Europäisches Patentamt

European Patent Office

Office européen des brevets

(11) Publication number: **0 143 586**
**A2**

# EUROPEAN PATENT APPLICATION

(21) Application number: **84307967.4**

(22) Date of filing: **16.11.84**

(51) Int. Cl.⁴: **B 01 D 39/02**

(30) Priority: **18.11.83 GB 8330781**

(71) Applicant: **WATER RESEARCH CENTRE, P.O. Box 16 Henley Road Medmenham, Marlow Buckinghamshire SL7 2HD (GB)**

(43) Date of publication of application: **05.06.85 Bulletin 85/23**

(72) Inventor: **Gregory, Ross, 21 Baldock Road, Letchworth Hertfordshire, SG6 3JX (GB)**

(84) Designated Contracting States: **AT BE CH DE FR GB IT LI NL SE**

(74) Representative: **Wain, Christopher Paul et al, A.A. THORNTON & CO. Northumberland House 303-306 High Holborn, London WC1V 7LE (GB)**

(54) **Filtration with open-structured materials.**

(57) There is disclosed a method and apparatus for filtering aqueous liquids which comprises a filtration bed through which the liquid is passed, in which the filtration bed comprises a plurality of small, preferably less than 100 cm², pieces of open-structured material. The material may be bonded synthetic fibre matting or a body of knitted or woven monofilaments.

- 1 -

FILTRATION WITH OPEN-STRUCTURED MATERIALS

This invention relates to the filtration of aqueous liquids. More specifically, this invention relates to the use of small pieces of open-structured materials as a filter media to be used on its own or in conjunction with other filter media. The invention can be applied to slow sand filtration, rapid sand filtration and to precoat filtration.

Filtration is the most important unit process in water treatment other than for chemical disinfection. In the majority of cases, the type of filtration is granular media filtration using either or both sand and other materials. Several mechanisms occur in the filtration including straining at the face of the bed of the media with formation of a mat and deposition within the bed of the media to cause clogging. The rate of filtration governs which predominates. When the rate of filtration is slow, straining predominates.

In what is termed slow sand filtration the mat formed is allowed to be biologically active. The flora and fauna which constitute part of the mat, schmutzdecke, graze upon smaller organisms, particularly bacteria, and upon the dissolved and undissolved organic contaminants in the water causing some chemical as well as microbiological purification of the water. However, when the concentrations of small silt particles and algal cells are high, the clogging of the sand can be fast and unacceptable.

Various methods have been used to reduce the problem of clogging in slow sand filters, the usual approach being to carry out some form of pre-filtration. Recently, in connection with very small slow sand filtration units (e.g. about 1 square metre), a carpet of matting made from bonded synthetic fibres has been laid on top of the sand bed. The matting serves two purposes, namely to provide a sedimentation zone and thereby reduce clogging, and also to provide a greater depth for flora and fauna to accumulate and graze thereby increasing microbiological purification. The matting used has been in the form of a single piece. In a slightly larger unit (diameter about 4m), 2m wide strips of the matting have been laid on the sand surface. In both these sizes of unit, the matting is periodically removed by hand for cleaning and replacement.

Whilst, in small units, the manual removal of this matting and the manual placement of fresh or cleaned matting is a manageable procedure, it is not convenient in larger units whose surface area can extend, for example, to 400 square metres or more.

It is an object of the present invention to provide a method and apparatus which overcomes this problem.

According to a first aspect of the present invention there is provided a method of filtration of aqueous liquids comprising the step of passing the liquid into a filtration bed which, at least in part, comprises a plurality of small (as hereinbefore defined) pieces of open-structured material.

According to a second aspect of the present invention there is provided an apparatus to filter aqueous liquids comprising a filtration bed which comprises, at least in part, a plurality of small (as hereinbefore defined) pieces of open-structured material.

Instead of using one or more pieces of matting each of which is large in relation to the total area to be covered, such as about 2 square metre for convenient manual handling or in long strips for mechanical handling, much smaller pieces of matting can be used. By small, we mean that they are small in relation to existing mechanical equipment used for cleaning filters, and in relation to the material described above.

In conventional large slow sand filters it is usual to have a fully or extensively mechanised arrangement for periodically scraping the biological mat (schmutzdecke) and the top few cm. of sand for cleaning. If an artificial mat is placed on the sand, in the form of a plurality of relatively small pieces, these pieces will be cleared in the scraping process for cleaning, and fresh pieces can then be installed. We envisage that, for example with the large slow sand filtration beds, pieces of matting up to about 100 cm. square could be utilised, although (as is described hereinafter) smaller pieces might be preferred.

The invention is not limited to large slow sand filter beds: it may equally be applied to medium or small beds.

Whilst the invention has been particularly described hereinabove with reference to slow sand filtration, it is also applicable in certain aspects to other types of filtration. Thus, for example, it may also be applied to rapid filters. In such filters a multiplicity of layers of pieces of the above materials placed or held in a chamber can be used as the sole means of filtration or to precede another stage of filtration. Alternatively, a multiplicity of layers of pieces can be placed or held on the granular filter media in the chamber of existing rapid sand filters.

The invention may also be applied to pre-coat filters to build up a porous coating on the candle by feeding suitably sized pieces of the materials described into the inflow either on their own or in admixture.

In both slow and rapid sand filters and the like, the invention is applicable whether the direction of filtration be upflow, downflow, crossflow, radial flow or

- 4 -

any other mode.

In modifying the prior known processes as described above, we have further found that open-structured materials other than the bonded matting described can be used, and indeed that many of these other materials are advantageous over the use of such matting. Thus, we have found that, in general, rigid or compressible porous pieces of metal, plastic or natural substances can be used in the form for examples of foamed, sintered, felted or woven structures. These materials are provided in the form of a layer or admixture, and act in the same way as the bonded matting referred to.

These materials can be used in the form of a single layer of "small" pieces covering the entire area of the filter. Alternatively, and as is usually preferred, they can be used in the form of a multiplicity of layers laid out to a suitable depth.

Cleaning of "small" pieces may usually be effected by centrifugal or compressive treatment, or by high pressure washing, within or external to the filter chamber in which they are used, for example. The pieces can usually be re-used after cleaning.

The size of the "small" pieces used can vary quite widely. Pieces of sponge as small as two or three cm. cube can be used, as can larger pieces of material up to about 100 cm square or more though only about half cm. thick. The optimum size depends on the material itself and on the system in which it is to be used. The pieces are preferably sized so as to be mechanically or hydraulically handleable, as to removal from the filter bed, and/or cleaning, and/or loading on the bed.

As an example of such small pieces, one suitable type of material is described in U.K. specification no. 2006181A to which reference should be made for further details. The material there described is in the form of small bodies each having a substantial voidage therein with an extensive area of access thereto from the outer surface. Such bodies can be made of, for example, metal or plastics material, and in the latter case can be porous bodies of an apparently open weave structure and can be made, for example, by knitting monofilaments or from sponges by known techniques. Their structure resembles that of the familiar interlinked nylon domestic cleaning pads.

- 6 -

CLAIMS:

1.    A method of filtration of aqueous liquids comprising the step of passing the liquid into a filtration bed which, at least in part, comprises a plurality of small (as hereinbefore defined) pieces of open-structured material.

2.    A method as claimed in claim 1, wherein the small pieces are disposed in one or more layers.

3.    A method as claimed in claim 2, wherein the or each layer is disposed substantially at the inlet side of the filtration bed.

4.    A method as claimed in claim 1, wherein the small pieces are admixed into the filtration bed.

5.    A method as claimed in any one of the preceding claims, wherein the small pieces are fed to the filtration bed through the same channels as the inflow thereto.

6.    A method as claimed in any one of the preceding claims, wherein the small pieces comprise bonded synthetic fibre matting.

7.    A method as claimed in any one of claims 1 to 5, wherein the small pieces comprise a foamed material.

8.    A method as claimed in any one of claims 1 to 5, wherein the small pieces comprise a plurality of monofilaments knitted or woven together.

9.      An apparatus to filter aqueous liquids comprising
a filtration bed which comprises, at least in part, a
plurality of small (as hereinbefore defined) pieces of
open-structured material.

10.      An apparatus as claimed in claim 9, wherein the
small pieces are disposed in one or more layers.